# EUROPÄISCHE PATENTANMELDUNG

(11) **EP 1 378 652 A2**
(43) Veröffentlichungstag der Anmeldung: **07.01.2004**
(21) Anmeldenummer: 03013495.1
(22) Anmeldetag: 26.06.2003
(51) Int. Cl.: F02K 9/34, F02K 9/97

(54) **Mehrschichtiger Verbundwerkstoff**

(30) Priorität: 04.07.2002 DE 10230231
(71) Anmelder: SGL CARBON AG, 65203 Wiesbaden (DE)
(72) Erfinder: Benitsch, Bodo, 86647 Buttenwiesen (DE); Gruber, Udo, 86356 Neusäss (DE); Schweizer, Sven, 86150 Augsburg (DE); Winkelmann, Peter, 86672 Thierhaupten (DE)
(74) Vertreter: Deckers, Hellmuth, Dr.

(57) **Zusammenfassung**

Verbundwerkstoff für Brennkammern oder Düsen von Flugkörpern, umfassend eine den Verbrennungsgasen zugewandte Innenschicht und eine Außenschicht, dadurch gekennzeichnet, daß die Innenschicht eine faserverstärkte Keramik ist, deren Matrix Phasen aus Kohlenstoff und/oder Phasen aus Siliciumcarbid enthält, und daß die Außenschicht ein mit Kohlenstoffasern verstärkter Kunststoff ist, Verfahren zu deren Herstellung sowie Brennkammern und Düsen für Raketenflugkörper aus diesen Verbundwerkstoffen

## Beschreibung

Die vorliegende Erfindung betrifft einen mehrschichtigen Verbundwerkstoff insbesondere für Brennkammern für Raketentriebwerke und Düsen sowie den Düseneinlauf von Flugkörpern, insbesondere Raketendüsen.

Für Schubdüsen und Ringe für Raketentriebwerke in sogenannten "Boostern" für Raumflugzeuge oder für bodennahe Raketen sind Materialien erforderlich, die sehr hohen Temperaturen widerstehen können. Diese Temperaturen können bei den für Booster üblichen Festtreibstoffen teilweise über 3500 °C betragen. Die Temperaturbelastung des Strukturmaterials eines Ring sowie Düse darf nur so hoch sein, daß das Material zumindest die Brenndauer unbeschadet überdauern kann. Die bisher häufig verwendeten hochtemperaturfesten metallischen Legierungen, insbesondere in Verbindung mit Isolier- und Kühleinrichtungen, werden zunehmend durch keramische Werkstoffe ersetzt. So ist aus DE-A 197 30 674 eine Brennkammer insbesondere für Raketentriebwerke bekannt, deren Innenmantel aus Faserkeramikmaterial oder Graphit und deren Außenmantel ebenfalls aus Faserkeramikmaterial gebildet ist. Bevorzugt besteht das Faserkeramikmaterial aus kohlenstoffaserverstärktem Kohlenstoff (C/C) und/oder kohlenstoffaserverstärktem Siliciumcarbid (C/SiC). Zwischen Innen- und Außenmantel verlaufen Kühlmittelkanäle. Aus der EP-B 0 918 976 ist ein Verfahren zur Herstellung von Flugkörperkomponenten bekannt, das auch die Herstellung von Brennkammern und Schubdüsen für Flugkörper umfaßt. Hierbei werden einzelne Rohlinge aus faserverstärkter Keramik aus den Werkstoffen C/SiC, C/C und/oder siliciumcarbidfaserverstärktem Siliciumcarbid (SiC/SiC) gefertigt und durch eine gemeinsame Infiltration mit Si, SiC und/oder Kohlenstoff zur fertigen Flugkörperkomponente zusammengefügt. Bevorzugt wird eine Tragstruktur mit hoher Dichte und eine wärmeisolierende Auskleidung mit hoher Porosität und geringer Dichte eingesetzt. Brennkammern, deren Strukturmaterial vollständig aus C/SiC gebildet ist, sind aus DE-A 198 04 232 bekannt. Die darin beschriebenen Brennkammern für Hochleistungstriebwerke bestehen aus einem Außenmantel und einem mit den heißen Gasen in Verbindung stehenden inneren Grundkörper, der mit einer Vielzahl von Kühlkanälen versehen ist. Der Außenmantel besteht aus mit Langfasern verstärktem C/SiC und der Grundkörper aus mit Kurzfasern verstärktem C/SiC. In diesem Stand der Technik wird die Temperatureinwirkung auf die strukturtragende Komponente der Brennkammer teils durch Kühlkanäle und teils durch eine wärmeisolierende Auskleidung vermindert. Beide Bauweisen erfordern zusätzlichen Bauraum und bringen zusätzliches Gewicht in die Gesamtkonstruktion ein. Sowohl Raumangebot als auch zulässiges Gewicht sind gerade für kleine Flugkörper sehr eingeschränkt. Für Flugraketen werden häufig Staustrahltriebwerke eingesetzt, die mit zusätzlichem festen Treibstoff für die Zündphase ausgestattet sind. Dieser feste Treibstoff verbrennt schlagartig, um den Raketen einen hohen Anfangsschub zu verleihen. Diese Phase der hohen Anfangsbeschleunigung wird auch als Boost-Phase bezeichnet.

Der Erfindung liegt die Aufgabe zugrunde, einen geeigneten Werkstoff zur Verfügung zu stellen, der es erlaubt, Ring, Düsen und Brennkammern in kompakter Bauweise zu schaffen, der eine hohe Anfangsfestigkeit während der "Boost-Phase" und eine hohe Langzeittemperaturstabilität sowie Abrasionsbeständigkeit aufweist, sowie ein kostengünstiges Herstellungsverfahren hierfür bereitzustellen.

Diese Aufgabe wird gelöst durch einen mehrschichtigen Verbundwerkstoff für Brennkammern oder Düsen von Flugkörpern, umfassend eine den Verbrennungsgasen zugewandte Innenschicht und eine Außenschicht, wobei die Innenschicht eine faserverstärkte Keramik ist, deren Matrix Phasen aus Kohlenstoff und/oder Phasen aus Siliciumcarbid enthält, und wobei die Außenschicht ein mit Kohlenstoffasern verstärkter Kunststoff ist.

Die Erfindung betrifft ebenfalls eine Ring-, Düsen- oder Brennkammer-Konstruktion, welche aus einer den Verbrennungsgasen zugewandten Innenschicht aus faserverstärkter Keramik, bevorzugt in Gradientenform, und eine Außenschicht aufweist, wobei diese Außenschicht aus faserverstärktem Kunststoff aufgebaut ist, sowie ein Verfahren, das die Flüssigsilicierung eines porösen kohlenstoffhaltigen Vorkörpers (C/C-Grünkörper) in Form der Innenschicht und das Umkleiden des silicierten Vorkörpers mit faserverstärktem Kunststoff (CFK) umfaßt.

Die faserverstärkte Keramik, die bevorzugt in Gradientenform vorliegt, besteht aus C/SiC (mit Kohlenstoffasern verstärktes Siliciumcarbid, das auch weitere Phasen aus Si und/oder Kohlenstoff aufweisen kann) und C/C (kohlenstoffaserverstärkter Kohlenstoff), wobei beide Werkstoffe graduell ineinander übergehen. Insbesondere bei den für kleine Flugraketen typischen Raketenmotoren mit integriertem Booster treten bei der Zünd- und Boost-Phase sehr hohe strukturelle Beanspruchungen des Düsenmantels auf, die nach dieser Phase (die allgemein als Marsch-Phase bezeichnet wird) nicht mehr erreicht werden. Die Düse und der Ring müssen somit zunächst eine sehr hohe Festigkeit und danach eine hohe Temperaturfestigkeit sowie Abrasionsbeständigkeit aufweisen. Bekanntermaßen weisen mit Langfasern verstärkte Verbundwerkstoffe bei geeigneter Faserausrichtung höhere Zugfestigkeit in der Faserrichtung als vergleichbare kurzfaserverstärkte Verbundwerkstoffe auf. Dieses Prinzip der Langfaserverstärkung findet zum Beispiel auch in der DE-A 198 04 232 Anwendung.

Im Gegensatz zum Stand der Technik ist das die Festigkeit der Brennkammer, der Düse oder des Ringes bewirkenden Material erfindungsgemäß nicht ein keramischer Werkstoff mit hoher Temperaturbeständigkeit, sondern ein mit Kohlenstoffasern verstärktes Polymer oder Kunststoff (CFK). Der CFK hat den entscheidenden Vorteil, daß er wesentlich höhere Zugfestigkeit besitzt als mit Kohlenstoffasern verstärkte Keramiken. Dies trifft sowohl auf C/C- als auch auf C/SiC-Keramiken zu. Weitere Vorteile sind die schnellere und kostengünstigere Herstellbarkeit, insbesondere im Vergleich zu C/SiC, sowie die geringere Dichte von CFK gegenüber den faserverstärkten Keramiken. Nach der Zündung des Triebwerks kann das Polymer jedoch den hohen Verbrennungstemperaturen nur kurz widerstehen und wird carbonisiert oder verbrennt, so daß die Außenschicht nach kurzer Zeit ihre Festigkeit einbüßt.

Es wurde überraschend gefunden, daß die thermische Zerstörung der CFK-Außenschicht langsam genug voranschreitet, um die benötigte Stützfunktion während der Belastung durch die Boost-Phase zu gewährleisten. Nach dem Übergang von der Boost-Phase zur Phase des konventionellen Raketenantriebs, insbesondere durch Flüssigtreibstoffe, wird die zusätzliche Stützfunktion nicht mehr benötigt, so daß die Zersetzung und der Abbrand des CFK hingenommen werden können. Des weiteren ist die konstruktive Auslegung der Bauteile so gestaltet, daß die Zersetzung der CFK-Außenschicht bei der Verbindung zwischen der Brennkammer und der tragenden Außenstruktur des Flugkörpers keine Nachteile verursacht. Typischerweise ist die Außenschicht des Brennkammer-Verbundwerkstoffs geometrisch und chemisch so aufgebaut, daß sie innerhalb der Boost-Phase, oder zumindest innerhalb einer Zeitspanne von 2 Sekunden nach der Zündung des Triebwerks nicht mehr als 50 % ihrer Festigkeit einbüßt.

Die Festigkeit der Außenschicht wird durch die geometrische Ausrichtung der Verstärkungsfasern wesentlich beeinflußt. Typischerweise sind die Fasern senkrecht zur Längsachse der Brennkammer, der Düse oder des Rings ausgerichtet, bevorzugt in Umfangsrichtung der Düse auf dem Düsenaußenmantel bzw. dem Ringmantel aufgewickelt. Die Faserstränge oder Bündel liegen dabei bevorzugt nahezu parallel zueinander oder über Kreuz, wobei der Kreuzungswinkel zueinander 45° nicht überschreitet. Der Volumenanteil von Fasern in der Außenschicht liegt erfindungsgemäß bei mindestens 30 %, bevorzugt bei mindestens 45 %. Als Fasern sind hochfeste Kohlenstoffasern oder Graphitfasern, insbesondere in Form von Faserbündeln oder Rovings, bevorzugt.

Als Kunststoffmatrix werden thermisch härtbare Duroplaste, insbesondere Phenol- oder Epoxidharze, besonders bevorzugt carbonisierbare Kunststoffe eingesetzt. Das hat den Vorteil, daß durch die thermische Zersetzung der CFK-Außenschicht aus den carbonisierbaren Kunststoffen zumindest teilweise stabiles CFC gebildet wird. Neben den für die Herstellung von CFK gängigen Polymeren können auch siliciumorganische Polymere eingesetzt werden. Bevorzugt sind dies Polymere, die bei der durch die Brenntemperaturen hervorgerufene Pyrolyse Silicium- oder Siliciumcarbidkeramiken bilden, besonders bevorzugt sind Silane, Carbosilane, Silazane oder Silikone. Durch die Keramisierung des CFK wird die Temperaturstabilität beziehungsweise die Lebensdauer der Außenschicht deutlich erhöht.

Die Außenschicht für eine Düse ist etwa gleich dick wie die Innenschicht aus faserverstärkter Keramik, kann jedoch je nach den Anforderungen dicker oder dünner als die Innenschicht aus faserverstärkter Keramik hergestellt werden. Erfindungsgemäß liegt die Dicke der Außenschicht für eine Düse zwischen 80 und 20 % der gesamten Dicke der Düsenwand, bevorzugt zwischen 70 und 30 %, besonders bevorzugt zwischen 60 und 40 %. Für einen Ring liegt erfindungsgemäß die Dicke der Außenschicht zwischen 10 und 30 % der gesamten Dicke des Rings. Bedingt durch die hohe Anfangsfestigkeit der Düse, der Brennkammer oder des Rings, die in erfindungsgemäßer Weise durch die CFK-Außenschicht bewirkt wird, kann die Wandstärke bei Düse und Ring vergleichsweise niedrig ausfallen. Ebenso kann auf eine Isolationsschicht oder Kühlvorrichtungen der CFK-Außenschicht verzichtet werden. Beides bewirkt in vorteilhafter Weise eine Verringerung des Bauteilgewichtes sowie der Bauteilwandstärke, und vermindert somit den benötigten Einbauraum, gleichzeitig wird mehr Raum zum Einbau von Isolationsmaterial zur Verfügung gestellt. Hierdurch kann die gegebenenfalls vorhandene Außenstruktur des Flugkörpers, die funktionsbedingt eine bestimmte Temperatur nicht überschreiten darf, entsprechend geschützt werden.

Typische Wandstärken der erfindungsgemäß ausgeführten Düsen oder Ringe, umfassend die Innen- und die Außenschicht, liegen bei maximal 30 mm, bevorzugt höchstens 15 mm und besonders bevorzugt im Bereich von 3 bis 12 mm.

Die Innenschicht der Brennkammer, der Düse oder des Rings wird durch eine hochtemperaturfeste faserverstärkte Keramik gebildet. Erfindungsgemäß wird bevorzugt ein C/SiC- oder ein aus C/Cund C/SiC-Bereichen aufgebauter Verbundwerkstoff eingesetzt.

Unter einem C/C-Werkstoff sind alle mit Kohlenstoffasern verstärkten Kohlenstoff-Verbundwerkstoffe zu verstehen, die gegebenenfalls neben Kohlenstoff auch als Zuschlagstoffe Verbindungen weiterer Elemente enthalten können. Bevorzugt enthält die Matrix der Innenschicht Phasen aus Siliciumcarbid sowie Phasen aus Kohlenstoff und/oder Phasen aus Silicium. Es ist weiter bevorzugt, daß die Matrix der Innenschicht einen von innen nach außen abnehmenden Gehalt an Siliciumcarbid und/oder Silicium aufweist. Auf diese Weise geht in der Innenschicht der C/SiC-Werkstoff graduell in den C/C-Werkstoff über (im folgenden auch Gradienten-C/SiC genannt). Der Gradientenaufbau wird dadurch unterstützt, daß das Silicium im Unterschuß bezüglich der Umsetzung des freien Kohlenstoffs zu Siliciumcarbid zugegeben wird. Zumindest auf der Innenseite der Innenschicht, also der den Brenngasen zugewandten Seite, liegt ein C/SiC-Werkstoff vor. Die Innenschicht ist bevorzugt auf der inneren Oberflächenschicht nahezu vollständig aus SiC und/oder Si aufgebaut oder durch SiC und/oder Si versiegelt. Mindestens beträgt der Massenanteil an freiem oder chemisch gebundenem Silicium an der inneren Oberflächenschicht jedoch 50 %, bevorzugt mindestens 55 %, und besonders bevorzugt mindestens 60 %. Unter "versiegelt" wird hier verstanden, daß die von der Oberfläche zugänglichen Poren vollständig oder nahezu vollständig (d. h. zu mindestens 90 %) verschlossen sind. Die Versiegelung erfolgt in vorteilhafter Weise durch einen partiellen Überschuß an Silicium bei der Flüssigsilicierung des C/C-Grünkörpers.

Bevorzugt ist der Massenanteil an freiem oder chemisch gebundenem Silicium in der Matrix der Innenschicht in der den Verbrennungsgasen abgewandten Außenseite höchstens 30 %. Es ist weiter bevorzugt, daß der Massenanteil an Kohlenstoff in der den Verbrennungsgasen abgewandten Außenseite der Innenschicht mindestens 95 % beträgt. In einer weiteren bevorzugten Ausführungsform weisen die Verstärkungsfasern der Innenschicht eine mittlere Länge von mindestens 50 mm auf. Es ist ebenfalls bevorzugt, daß die Verstärkungsfasern der Außenschicht eine mittlere Länge von mindestens 50 mm aufweisen. Der Volumenanteil an Fasern in der Außenschicht ist bevorzugt mindestens 35 %. Der Kunststoff in der Außenschicht besteht in bevorzugter Weise aus carbonisierbaren Polymeren, wobei die Masse des Pyrolyserückstands dieser Polymeren mindestens 35 % der Masse der Polymeren beträgt. In einer weiteren bevorzugten Ausführungsform ist die mittlere Dicke der Außenschicht geringer ist als die mittlere Dicke der Innenschicht.

Das Verfahren zur Herstellung des mehrschichtigen Verbundwerkstoffs umfaßt die Schritte
1. Herstellung eines mit Kohlenstoffasern verstärkten Vorkörpers mit einer Matrix aus Kohlenstoff in Form der Innenschicht
2. Silicierung zumindest der Innenseite des Vorkörpers mit einer Siliciumschmelze
3. Umhüllen des silicierten Vorkörpers mit einem Polymer-imprägnierten Gewebe, Polymer-imprägnierten Faserbündeln oder Polymer-imprägnierten Fasergelegen auf seiner Außenseite, wobei das Material der Fasern und Gewebe Kohlenstoff ist und das Polymer thermisch härtbar ist, und
4. Aushärtung der durch Umhüllen gebildeten Außenschicht zur Bildung eines kohlenstoffaserverstärkten Kunststoffes.

Nach der Herstellung eines C/C-Vorkörpers auf bekannte Weise schließt sich die Flüssigsilicierung des porösen kohlenstoffhaltigen-Grünkörpers (C/C-Grünkörper) an, wobei zumindest die Innenseite der Innenschicht der hieraus gebildeten Düse, der Brennkammer oder des Rings zu C/SiC umgesetzt wird. Hierzu wird nach den bekannten Verfahren ein C/C-Grünkörper in Form der Innenschicht hergestellt, welcher jedoch erfindungsgemäß direkt in einer endkonturnahen Form ausgeführt wird, um maximale mechanische Festigkeit aus der zur Verfügung stehenden Wandstärkengeometrie zu erzielen und eine möglichst kostengünstige Fertigung gewährleisten zu können. Dabei können Vorkörper mit Wandstärkensprüngen direkt hergestellt werden, wobei solche Wandstärkensprünge wegen der unterschiedlichen Festigkeitsanforderungen im Bauteil sowie zur Ausbildung von Aufnahmen bzw. Unterstützung ausgeführt werden.

Der C/C-Grünkörper kann dabei aus Kurz- oder Langfasern, sowie aus gebündelten, insbesondere beschichteten Fasern aufgebaut sein. Bei Verwendung von Langfasern werden bevorzugt die Wickel- und die Prepregtechnik angewendet, um den Vorkörper zur Herstellung des C/C-Grünkörpers aufzubauen. Dabei können mehrere Lagen von Kohlenstoffaser-Geweben oder Rovings übereinander gebracht werden. Die mittlere Faserlänge beträgt im Fall der Verwendung von Langfasern mindestens 50 mm.

Dieser Vorkörper wird in bekannter Weise zu einem C/C-Grünkörper carbonisiert. Wird eine exakte Konturtreue und Maßhaltigkeit gefordert, so ist es bevorzugt, den Grünkörper mit einer geeigneten Vorrichtung zu stützen und gegen Verziehen zu befestigen. Es wird weiter bevorzugt, diesen Grünkörper ein- oder vorzugsweise mehrfach mit Kohlenstoff nachzuverdichten. Dies geschieht, indem der poröse Grünkörper mit flüssigen Harzen imprägniert wird und der imprägnierte Körper anschließend unter Sauerstoff-Ausschluß erhitzt wird, wobei die Harze zunächst unter Bildung einer Duroplastphase abbinden oder härten, und die gehärteten Harze dann unter Bildung von Kohlenstoff-Rückständen zersetzt werden. Im darauffolgenden Schritt wird der C/C-Körper mit flüssigem Silicium infiltriert, wobei die Siliciumschmelze bevorzugt über die Innenseite des Innenmantels der später ausgebildeten Düse, Brennkammer oder des Ringes zugeführt wird. In diesem Fall ergibt sich üblicherweise ein Silicium- bzw. SiC-Gradient mit abnehmender Konzentration von der Innen- zur Außenseite der Innenschicht, der gegebenenfalls auch bis auf nahezu 0 % auf der Außenseite der Innenschicht abnehmen kann. Bevorzugt beträgt der Massenanteil an Silicium (in gebundener und freier Form) in der äußeren Zone des keramischen Verbundwerkstoffs höchstens 30 %. Nach der Silicierung werden die gebildeten Verbundwerkstoff-Körper keramisch bearbeitet, unter Ausbildung der erforderlichen Anschlüsse oder Befestigungsvor- oder -rücksprünge.

Hiernach wird auf die Außenseite die Außenschicht aus CFK aufgetragen. Die Verstärkungsfasern haben dabei bevorzugt eine mittlere Länge von mindestens 50 mm. Bei der Verwendung von Langfasern können insbesondere die Wickeltechnik und die Prepregtechnik zur Umhüllung der Innenschicht des mehrschichtigen Verbundwerkstoffs mit dem Material der Außenschicht eingesetzt werden. Auch in diesem Fall können mehrere Lagen von Kohlenstoffaser-Geweben oder -Rovings übereinander angeordnet werden. Die Langfasern der Faserbündel, Rovings oder Gewebe werden dabei bevorzugt in Umfangsrichtung ausgerichtet und über die gesamte Außenfläche des Innenmantels je nach Anforderung mit unterschiedlicher Wandstärke endkonturnah aufgebracht, besonders bevorzugt nur im Bereich der je nach Festigkeitsanforderungen notwendigen Fläche. Eine Bearbeitung der aufgetragenen CFK-Schicht findet vorzugsweise nicht statt. Die Langfasern sind mit härtbaren Kunststoffen durchsetzt und werden in bekannter Weise zum CFK ausgehärtet.

Als härtbare Kunststoffe werden Phenolharze, Epoxidharze, Polyesterharze, Polyurethanharze und siliciumorganische Polymere bevorzugt.

Die erfindungsgemäßen mehrschichtigen Verbundwerkstoffe eignen sich insbesondere zur Herstellung von Brennkammern und Düsen für Raketen.

## Patentansprüche

1. Mehrschichtiger Verbundwerkstoff für Brennkammern oder Düsen von Flugkörpern, umfassend eine den Verbrennungsgasen zugewandte Innenschicht und eine Außenschicht, **dadurch gekennzeichnet, daß** die Innenschicht eine faserverstärkte Keramik ist, deren Matrix Phasen aus Kohlenstoff und/oder Phasen aus Siliciumcarbid enthält, und daß die Außenschicht ein mit Kohlenstoffasern verstärkter Kunststoff ist.

2. Verbundwerkstoff nach Anspruch 1, **dadurch gekennzeichnet, daß** die Matrix der Innenschicht Phasen aus Siliciumcarbid sowie Phasen aus Kohlenstoff und/oder Phasen aus Silicium enthält.

3. Verbundwerkstoff nach Anspruch 1, **dadurch gekennzeichnet, daß** die Matrix der Innenschicht einen von innen nach außen abnehmenden Gehalt an Siliciumcarbid und/oder Silicium aufweist.

4. Verbundwerkstoff nach mindestens einem der vorangehenden Ansprüche, **dadurch gekennzeichnet, daß** der Massenanteil an freiem oder chemisch gebundenem Silicium in der Matrix der Innenschicht in der den Verbrennungsgasen zugewandten Innenseite mindestens 50 % beträgt.

5. Verbundwerkstoff nach Anspruch 1, **dadurch gekennzeichnet, daß** der Massenanteil an freiem oder chemisch gebundenem Silicium in der Matrix der Innenschicht in der den Verbrennungsgasen abgewandten Außenseite höchstens 30 % beträgt.

6. Verbundwerkstoff nach Anspruch 1, **dadurch gekennzeichnet, daß** der Massenanteil an Kohlenstoff in der den Verbrennungsgasen abgewandten Außenseite der Innenschicht mindestens 95 % beträgt.

7. Verbundwerkstoff nach Anspruch 1, **dadurch gekennzeichnet, daß** die Verstärkungsfasern der Innenschicht eine mittlere Länge von mindestens 50 mm aufweisen.

8. Verbundwerkstoff nach Anspruch 1, **dadurch gekennzeichnet, daß** die Verstärkungsfasern der Außenschicht eine mittlere Länge von mindestens 50 mm aufweisen.

9. Verbundwerkstoff nach Anspruch 1, **dadurch gekennzeichnet, daß** der Volumenanteil an Fasern in der Außenschicht mindestens 35 % beträgt.

10. Verbundwerkstoff nach Anspruch 1, **dadurch gekennzeichnet, daß** der Kunststoff in der Außenschicht aus carbonisierbaren Polymeren besteht, wobei die Masse des Pyrolyserückstands dieser Polymeren mindestens 35 % der Masse der Polymeren beträgt.

11. Verbundwerkstoff nach Anspruch 1, **dadurch gekennzeichnet, daß** die mittlere Dicke der Außenschicht geringer ist als die mittlere Dicke der Innenschicht.

12. Verfahren zur Herstellung von Brennkammern oder Düsen für Flugkörper, bestehend aus einer mit den Verbrennungsgasen in Verbindung stehenden Innenschicht und einer Außenschicht, umfassend die Schritte
1. Herstellung eines mit Kohlenstoffasern verstärkten Vorkörpers mit einer Matrix aus Kohlenstoff in Form der Innenschicht
2. Silicierung zumindest der Innenseite des Vorkörpers mit einer Siliciumschmelze
3. Umhüllen des silicierten Vorkörpers mit einem Polymer-imprägnierten Gewebe, Polymer-imprägnierten Faserbündeln oder Polymer-imprägnierten Fasergelegen auf seiner Außenseite, wobei das Material der Fasern und Gewebe Kohlenstoff ist und das Polymer thermisch härtbar ist, und
4. Aushärtung der durch Umhüllen gebildeten Außenschicht zur Bildung eines kohlenstoffaserverstärkten Kunststoffes.

13. Verfahren nach Anspruch 12, **dadurch gekennzeichnet, daß** die Siliciumschmelze für die Silicierung des Vorkörpers im wesentlichen von der Innenseite des Vorkörpers zugeführt wird.

14. Verfahren nach Anspruch 13, **dadurch gekennzeichnet, daß** die Siliciumschmelze im Unterschuß zugegeben wird, so daß der Siliciumgehalt in dem silicierten Vorkörper von innen nach außen hin abnimmt.

15. Verfahren nach Anspruch 14, **dadurch gekennzeichnet, daß** nur so viel Siliciumschmelze zugeführt wird, daß der Massenanteil an freiem oder chemisch gebundenem Silicium auf der den Verbrennungsgasen abgewandten Außenseite des Vorkörpers höchstens 30 % beträgt.

16. Verfahren nach Anspruch 12, **dadurch gekennzeichnet, daß** die Faserverstärkung des C/C-Körpers durch mehrere Lagen an Kohlenstoffasergewebe und/oder Kohlenstoffaserroving aufgebaut ist.

17. Verfahren nach Anspruch 12, **dadurch gekennzeichnet, daß** die Langfaserverstärkung der Außenschicht durch mehrere Lagen von Kohlenstoffasergewebe und/oder Kohlenstoffaser-Rovings aufgebaut ist.

18. Verfahren nach Anspruch 12, **dadurch gekennzeichnet, daß** die Kunststoffe der Außenschicht ausgewählt sind aus Phenolharzen, Polyestern, Epoxidharzen, Polyurethanen und siliciumorganischen Polymeren.

19. Verwendung von Verbundwerkstoffen nach Anspruch 1 in Brennkammern oder Düsen von Raketenflugkörpem.
